# EUROPEAN PATENT SPECIFICATION

(11) **EP 4 289 514 B1**
(45) Date of publication and mention of the grant of the patent: **16.09.2026**
(21) Application number: 23178213.7
(22) Date of filing: 08.06.2023
(51) Int. Cl.: B05B 13/02, B05B 16/20, B65G 47/61

(54) **A VERTICAL COATING LINE AND A METHOD FOR TREATING ELONGATED PROFILES ON THE VERTICAL COATING LINE**
ANLAGE ZUR VERTIKALEN BESCHICHTUNG UND VERFAHREN ZUR BEHANDLUNG VON LÄNGLICHEN PROFILEN IN DIESER ANLAGE ZUR VERTIKALEN BESCHICHTUNG
LIGNE DE REVÊTEMENT À LA VERTICALE ET PROCÉDÉ DE TRAITEMENT DE PROFILS ALLONGÉS DANS CETTE LIGNE DE REVÊTEMENT À LA VERTICALE

(30) Priority: 10.06.2022 FI 20225510
(43) Date of publication of application: 13.12.2023
(73) Proprietor: Mäkelä Alu Oy, 62830 Luoma-aho (FI)
(72) Inventor: Pilbacka, Tomi, 62830 Luoma-aho (FI); Malinen, Joni, 62830 Luoma-aho (FI)
(74) Representative: Kolster Oy Ab

(56) References cited:
- WO-A1-2014/154668
- CN-A- 107 985 958
- CN-A- 114 083 016
- US-A1- 2018 057 085

## Description

### FIELD OF THE INVENTION

The invention relates to a vertical coating line comprising a loading section for loading elongated profiles in a horizontal position and a spraying section for coating the elongated profiles in a vertical position. The invention also relates to a method for treating elongated profiles on the vertical coating line.

### BACKGROUND OF THE INVENTION

The vertical coating line comprises a loading section for loading elongated profiles in a horizontal position and a spraying section for coating the elongated profiles in a vertical position. Each profile is fastened through a hole in its one end to a conveyor. The other end of the profile is supported by a plane when said profile is turned from the horizontal position to the vertical position. The plane may be a horizontal plane or an inclined plane.

There are certain problems with the above-mentioned vertical coating line. A profile that is handled on the line may easily cause mechanical defects to adjacent profiles, such as dents and deep scratches, because the profiles may touch each other, or even be stuck within each other. Occasionally the damages are so severe that some of the profiles must be discarded. Further, when the profiles get stuck within each other, they may get loose and fall, thus causing a safety risk to workers on the loading section.

CN 114 083 016 A discloses a multi-station working line for aluminum alloy door and window frame profiles.

### BRIEF DESCRIPTION OF THE INVENTION

An object of the present invention is to provide a vertical coating line and a method for treating elongated profiles on a vertical coating line so as to overcome the above problems. The objects of the invention are achieved by the vertical coating line according to claim 1 and the method according to claim 6. The preferred embodiments of the invention are disclosed in the dependent claims.

An advantage of the vertical coating line and the method is that the profiles can be turned from the horizontal position to the vertical position without damaging them.

The vertical coating line is for coating elongated profiles, such as aluminium or other metallic profiles. The vertical coating line comprises a section for loading, i.e. a loading section and a section for spraying, i.e. a spraying section. The vertical coating line may comprise sections for pre-treating, drying, curing, or unloading of the elongated profiles. The loading section is the first one. Thereafter there may be the sections for pre-treating and drying followed by the spraying section. After the spraying section there may be the curing section. The last section is the unloading section. The vertical coating line may be a loop that may have the loading section and the unloading section next to each other.

The spraying section is for coating the elongated profiles in a vertical position, i.e. the elongated profiles are powder coated with pigment particles when they are vertically orientated. Coating heads move up and down in the spraying section and spray pigment powder on the profiles.

Prior to the spraying section there is the loading section for loading the elongated profiles in a horizontal position. The loading section comprises a conveyor for conveying the elongated profiles to be coated and a plane for supporting each profile from its other end when said profile is turned from the horizontal position to the vertical position. The conveyor is typically a monorail conveyor. The monorail conveyor comprises a rail where individual trolleys move.

Each elongated profile is connected to the conveyor from its one end by a fastener, such as a hook, i.e. the elongated profiles hang from the conveyor. The conveyor may comprise successive hooks in order to hook each profile through a hole in its end. In the case of the monorail conveyor the trolleys carry the hooks.

The loading section further comprises a plane for supporting each profile from its other end when said profile is turned from the horizontal position to the vertical position. Contrary to the prior art stationary planes, the plane comprises at least one movable surface. The movable surface may be a rotatable surface, e.g. a conveyor belt that is carried by rotatable rolls. The movable surface may comprise multiple parallel movable surfaces, such as parallel conveyor belts. The multiple parallel movable surfaces may be assembled in such a manner that adjacent surfaces are close enough to each other in order to prevent dropping of a profile between the adjacent surfaces. The adjacent surfaces may nearly touch each other, or there may be a narrow batten between the adjacent surfaces. The distance between the adjacent surfaces may be at the most 10 millimetres. The movable surface and the conveyor may move at the same horizontal speed. The horizontal speeds of the conveyor and the movable surface are synchronized in such a manner that they automatically have the same speed. The same horizontal speeds guarantee steady distances between the profiles and thus safeguard the profiles against damages.

The profiles are placed horizontally in the loading section in such a manner that their longitudinal direction is perpendicular to the moving direction of the movable surface. Each profile is fastened from its one end to the conveyor. Each profile may be fastened by a hook that moves in the conveyor, such as the monorail conveyor. The conveyor extends parallel to the longitudinal direction of the loading section at this stage but may change its direction after the loading section. Although the conveyor extends parallel to the longitudinal direction of the loading section in the horizontal plane its height from the ground increases. The conveyor may extend upwards at a slope of 30 to 60°.

As the conveyor starts to convey the profiles and the movable surface moves at the same pace the profiles start to turn from the horizontal position to the vertical position when the profiles reach the sloping section of the conveyor. The ends of the profiles opposite to the fastened ends slide in the cross-direction of the movable surface in such a manner that the ends are supported by the movable surface. The section of the movable surface, which supports the ends, is preferably horizontally orientated. As the movable surface escorts the ends of the elongated profiles, the elongated profiles do not collide with each other.

The movable surface may have such friction properties so that the ends slide properly but are still adequately supported. Alternatively or additionally, the movable surface may comprise in its longitudinal direction changes in height, e.g. cross-directional battens that guide the ends to channels between the battens.

### BRIEF DESCRIPTION OF THE DRAWINGS

In the following the invention will be described in greater detail by means of preferred embodiments with reference to the attached drawings, in which
Figure 1 shows a perspective view of a loading section of a vertical coating line;
Figure 2 shows a perspective view of a loading section of a vertical coating line loaded with elongated profiles;
Figure 3 shows a schematic view of a vertical coating line from above.

### DETAILED DESCRIPTION OF THE INVENTION

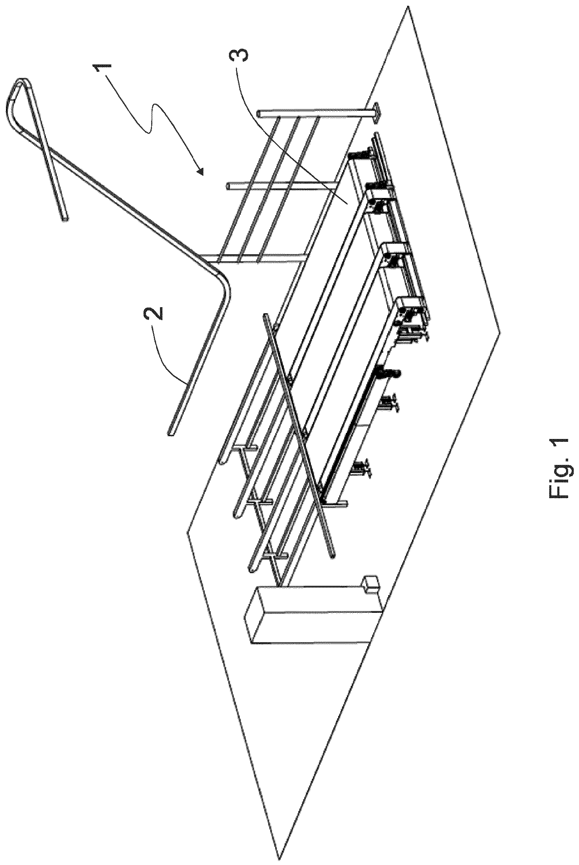

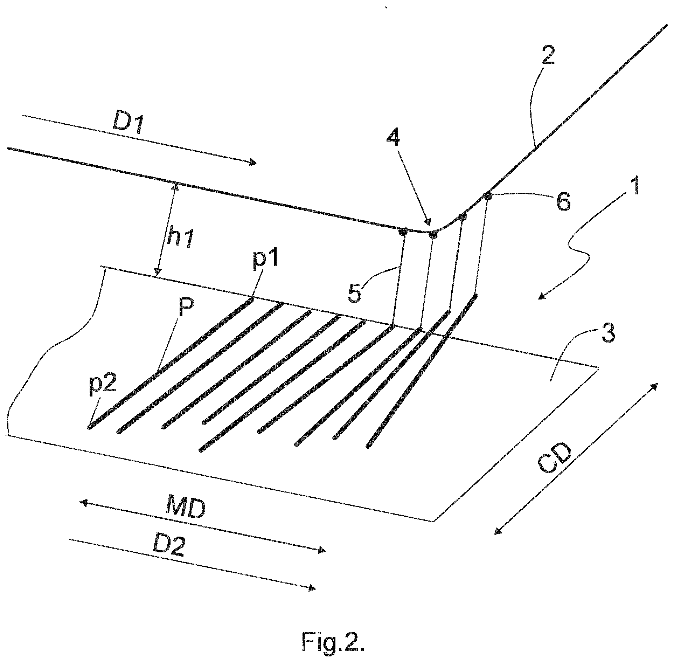

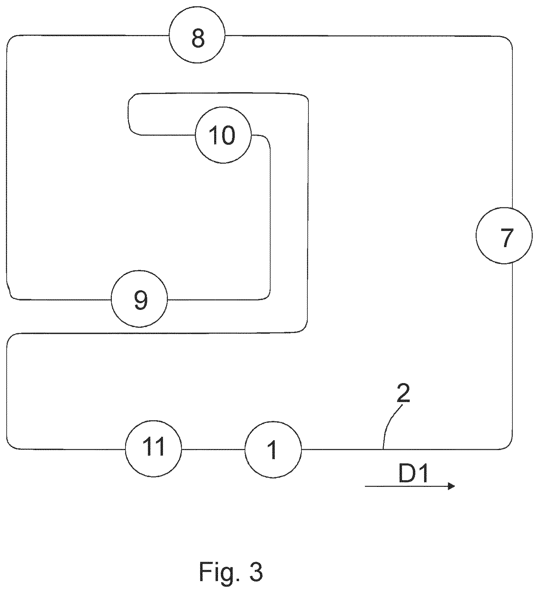

Figures 1 and 2 show perspective views of a loading section 1 of a vertical coating line. Figure 3 shows a schematic view of a vertical coating line. Features described in connection with one figure may be applied to the loading section 1 or the vertical coating line of the other figure. Further, the contents of the brief description are directly matching to the contents of the detailed description.

The loading section 1 comprises a conveyor 2 and a movable surface 3. The movable surface 3 of Fig. 1 comprises parallel wider conveyor belts and parallel narrower conveyor belts therebetween. The conveyor 2 may be a monorail conveyor that moves fasteners 5 (shown in Fig. 2). The conveyor 2 and the movable surface 3 are parallel in a horizontal plane at the loading section 1. However, outside the loading section 1 the conveyor 2 may meander as expedient.

Figure 1 shows only a part of the conveyor 2. The conveyor 2 is typically a loop that has all functions of the vertical coating line at the loop.

Figure 2 shows a perspective view of a loading section 1 when it is loaded. The loading section 1 comprises a conveyor 2 and a movable surface 3. The conveyor 2, which may be a monorail conveyor, has at the loading section 1 a horizontal advancing direction D1. The movable surface 3, which may be a rotatable surface, such as a conveyor belt, has a machine direction MD and a cross-direction CD. The horizontal advancing direction D1 and the machine direction MD are congruent. The movable surface 3 has a horizontal advancing direction D2.

The conveyor 2 and the movable surface 3 are parallel in a horizontal plane. There is a vertical distance between the conveyor 2 and the movable surface 3. At first the vertical distance is constant h1 but at a point 4 the conveyor 2 bends steeply upwards. The conveyor 2 may bend upwards at a slope of 30 to 60°.

The loading section 1 is loaded with elongated profiles P. The elongated profiles may have different lengths. Each elongated profile P has a first end p1 and a second end p2. Fasteners 5, such as hooks, are hanging from the conveyor 2. The fasteners 5 may hang from trolleys 6 of the conveyor 2. The fasteners 5 move along the conveyor 2.

The first end p1 of each profile P has been fastened to one of the fasteners 5. After the point 4 the first end p1 starts to rise from the movable surface 3 and the other end p2 slides across the movable surface 3. As the movable surface 3 moves to the same horizontal direction as the conveyor 2 the profiles P do not touch each other or be within each other but keep a certain distance from each other. The movable surface 3 supports the second end p2 of each profile before they rise above the movable surface 3 and start to hang freely, i.e. the movable surface 3 escorts the profile P before it hangs freely.

Preferably the movable surface is an endless rotatable surface. The movable surface 3 may be e.g. one belt conveyor or parallel belt conveyors that may have same or different widths. The belt conveyor forms an endless rotatable surface. The section of the belt conveyor, which supports the second ends p2, is preferably horizontally orientated.

The conveyor 2 has a first horizontal speed in the direction D1 and the movable surface 3 has a second horizontal speed in the direction D2. The second horizontal speed is the horizontal component of the total speed. The first and second horizontal speeds are the same.

Figure 3 shows a schematic view of a vertical coating line from above. The vertical coating line comprises a conveyor 2 that forms a loop. Functions of the vertical coating line take place at the loop. The vertical coating line comprises a loading section 1, a pre-treating section 7, a drying section 8, a spraying section 9, a curing section 10 and an unloading section 11.

It will be obvious to a person skilled in the art that, as the technology advances, the inventive concept can be implemented in various ways. The invention and its embodiments are not limited to the examples described above but may vary within the scope of the claims.

## Claims

1. A vertical coating line comprising a loading section (1) for loading elongated profiles (P) in a horizontal position and a spraying section for coating the elongated profiles in a vertical position, the loading section (1) comprises
a conveyor (2) for conveying elongated profiles (P) to be coated in such a manner that each profile (P) is connected to the conveyor (2) from its one end (p1), and
a plane for supporting each profile (P) from its other end (p2) when said profile (P) is turned from the horizontal position to the vertical position,
the plane comprising
at least one movable surface (3),
**characterized in that** the conveyor (2) and the plane are arranged in such a way that, during loading, the movable surface (3) supports the second end (p2) of each profile before each profile rises above the movable surface (3) and starts to hang freely.

2. The vertical coating line according to claim 1, **characterized in that** the at least movable surface (3) is a rotatable surface.

3. The vertical coating line according to claim 1 or 2, **characterized in that** the at least movable surface (3) is at least one belt conveyor.

4. The vertical coating line according to any preceding claim, **characterized in that** the conveyor (2) is a monorail conveyor.

5. The vertical coating line according to any preceding claim, **characterized in that** the conveyor (2) comprises fasteners (5) for hanging the elongated profiles (P).

6. A method for treating elongated profiles (P) on a vertical coating line, the method comprising:
• loading the elongated profiles (P) in a horizontal position to a conveyor (2) having a horizontal advancing direction (D1) and a first horizontal speed in such a manner that each profile (P) is connected to the conveyor (2) from its one end (p1),
• turning the elongated profiles (P) from the horizontal position to a vertical position on a sloping section of the conveyor (2) while supporting each profile from its other end (p2) by a plane, the plane comprising at least one movable surface (3) having a horizontal advancing direction (D2) and a second horizontal speed,
• supporting the ends (p2) of each profile (P) by the at least one movable surface (3) in such a manner that the horizontal advancing directions (D1, D2) are the same and the second horizontal speed is the same as the first horizontal speed when turning the elongated profiles (P) from the horizontal position to the vertical position.

7. The method according to claim 6, **characterized in that** the conveyor (2) is a monorail conveyor.

8. The method according to claim 6 or 7, **characterized in that** the movable surface (3) is at least one conveyor belt.

## Patentansprüche

1. Anlage zur vertikalen Beschichtung, umfassend einen Beladeabschnitt (1) zum Beladen länglicher Profile (P) in einer horizontalen Position und einen Sprühabschnitt zum Beschichten der länglichen Profile in einer vertikalen Position, wobei der Beladeabschnitt (1) Folgendes umfasst
einen Förderer (2) zum Fördern länglicher Profile (P), die beschichtet werden sollen, derart, dass jedes Profil (P) mit seinem einen Ende (p1) mit dem Förderer (2) verbunden ist, und
eine Ebene zum Abstützen jedes Profils (P) an seinem anderen Ende (p2), wenn das Profil (P) von der horizontalen Position in die vertikale Position gedreht wird,
wobei die Ebene zumindest eine bewegliche Oberfläche (3) umfasst,
**dadurch gekennzeichnet, dass** der Förderer (2) und die Ebene derart angeordnet sind, dass während des Beladens die bewegliche Oberfläche (3) das zweite Ende (p2) jedes Profils abstützt, bevor jedes Profil sich über die bewegliche Oberfläche (3) erhebt und frei zu hängen beginnt.

2. Anlage zur vertikalen Beschichtung nach Anspruch 1, **dadurch gekennzeichnet, dass** die zumindest eine bewegliche Oberfläche (3) eine drehbare Oberfläche ist.

3. Anlage zur vertikalen Beschichtung nach Anspruch 1 oder 2, **dadurch gekennzeichnet, dass** die zumindest eine bewegliche Oberfläche (3) zumindest ein Bandförderer ist.

4. Anlage zur vertikalen Beschichtung nach einem vorstehenden Anspruch, **dadurch gekennzeichnet, dass** der Förderer (2) ein Einschienenförderer ist.

5. Anlage zur vertikalen Beschichtung nach einem vorstehenden Anspruch, **dadurch gekennzeichnet, dass** der Förderer (2) Befestigungselemente (5) zum Hängen der länglichen Profile (P) umfasst.

6. Verfahren zur Behandlung länglicher Profile (P) auf einer Anlage zur vertikalen Beschichtung, wobei das Verfahren umfasst:
• Beladen der länglichen Profile (P) in einer horizontalen Position auf einen Förderer (2), der eine horizontale Vorschubrichtung (D1) und eine erste horizontale Geschwindigkeit aufweist, derart, dass jedes Profil (P) mit seinem einen Ende (p1) mit dem Förderer (2) verbunden ist,
• Drehen der länglichen Profile (P) von der horizontalen Position in eine vertikale Position auf einem geneigten Abschnitt des Förderers (2), während jedes Profil an seinem anderen Ende (p2) durch eine Ebene abgestützt wird, wobei die Ebene zumindest eine bewegliche Oberfläche (3) umfasst, die eine horizontale Vorschubrichtung (D2) und eine zweite horizontale Geschwindigkeit aufweist,
• Abstützen der Enden (p2) jedes Profils (P) durch die zumindest eine bewegliche Oberfläche (3) derart, dass die horizontalen Vorschubrichtungen (D1, D2) dieselben sind und die zweite horizontale Geschwindigkeit dieselbe ist wie die erste horizontale Geschwindigkeit, wenn die länglichen Profile (P) von der horizontalen Position in die vertikale Position gedreht werden.

7. Verfahren nach Anspruch 6, **dadurch gekennzeichnet, dass** der Förderer (2) ein Einschienenförderer ist.

8. Verfahren nach Anspruch 6 oder 7, **dadurch gekennzeichnet, dass** die bewegliche Oberfläche (3) zumindest ein Förderband ist.

## Revendications

1. Ligne de revêtement à la verticale comprenant une section de chargement (1) pour le chargement de profils allongés (P) en position horizontale et une section de pulvérisation pour le revêtement des profils allongés en position verticale, la section de chargement (1) comprend
un convoyeur (2) pour transporter des profils allongés (P) à revêtir de telle manière que chaque profil (P) soit relié au convoyeur (2) par son extrémité (p1), et
un plan pour soutenir chaque profil (P) par son autre extrémité (p2) lorsque ledit profil (P) est tourné de la position horizontale à la position verticale,
le plan comprenant au moins une surface mobile (3),
**caractérisée en ce que** le convoyeur (2) et le plan sont agencés de telle manière que, pendant le chargement, la surface mobile (3) soutienne la deuxième extrémité (p2) de chaque profil avant que chaque profil s'élève au-dessus de la surface mobile (3) et commence à pendre librement.

2. Ligne de revêtement à la verticale selon la revendication 1, **caractérisée en ce qu'**au moins une surface mobile (3) est une surface rotative.

3. Ligne de revêtement à la verticale selon la revendication 1 ou la revendication 2, **caractérisée en ce qu'**au moins une surface mobile (3) est au moins un convoyeur à bande.

4. Ligne de revêtement à la verticale selon une quelconque revendication précédente, **caractérisée en ce que** le convoyeur (2) est un convoyeur à monorail.

5. Ligne de revêtement à la verticale selon une quelconque revendication précédente, **caractérisée en ce que** le convoyeur (2) comprend des éléments de fixation (5) pour suspendre les profils allongés (P).

6. Procédé de traitement de profils allongés (P) dans une ligne de revêtement à la verticale, le procédé comprenant :
• le chargement des profils allongés (P) dans une position horizontale sur un convoyeur (2) présentant une direction d'avancement horizontale (D1) et une première vitesse horizontale de telle manière que chaque profil (P) soit relié au convoyeur (2) par son extrémité (p1),
• la rotation des profils allongés (P) de la position horizontale à une position verticale sur une section inclinée du convoyeur (2) tout en soutenant chaque profil par son autre extrémité (p2) au moyen d'un plan, le plan comprenant au moins une surface mobile (3) présentant une direction d'avancement horizontale (D2) et une deuxième vitesse horizontale,
• le support des extrémités (p2) de chaque profil (P) au moyen d'au moins une surface mobile (3) de telle manière que les directions d'avancement horizontales (D1, D2) soient identiques et que la deuxième vitesse horizontale est identique à la première vitesse horizontale lors de la rotation des profils allongés (P) de la position horizontale à la position verticale.

7. Procédé selon la revendication 6, **caractérisé en ce que** le convoyeur (2) est un convoyeur à monorail.

8. Procédé selon la revendication 6 ou la revendication 7, **caractérisé en ce que** la surface mobile (3) est au moins une bande de convoyeur.
